# EUROPÄISCHE PATENTSCHRIFT

(11) **EP 1 233 841 B1**
(45) Veröffentlichungstag und Bekanntmachung des Hinweises auf die Patenterteilung: **15.06.2005**
(21) Anmeldenummer: 00988556.7
(22) Anmeldetag: 02.11.2000
(51) Int. Cl.: B23K 1/008

(54) **VERFAHREN UND VORRICHTUNG ZUR HERSTELLUNG EINER LOTVERBINDUNG**
METHOD AND DEVICE FOR PRODUCING A SOLDERED JOINT
PROCEDE ET DISPOSITIF DE PRODUCTION D'UN JOINT SOUDE

(30) Priorität: 08.11.1999 DE 19953654
(43) Veröffentlichungstag der Anmeldung: 28.08.2002
(73) Patentinhaber: Pink GmbH Vakuumtechnik, 97877 Wertheim (DE)
(72) Erfinder: WEBER, Stefan, 97877 Wertheim (DE); KEMPER, Alfred, 59581 Warstein (DE)
(74) Vertreter: Tappe, Hartmut, Dipl.-Ing.
(86) Internationale Anmeldenummer: PCT/DE2000/003848
(87) Internationale Veröffentlichungsnummer: WO 2001/034334

(56) Entgegenhaltungen:
- JP-A- 3 106 562
- JP-A- 4 127 958
- US-A- 4 605 161
- US-A- 4 804 128
- US-A- 5 128 506
- US-A- 5 405 074
- US-A- 5 878 942

## Beschreibung

Die vorliegende Erfindung betrifft ein Verfahren und eine Vorrichtung gemäß dem Oberbegriff des Anspruchs 1 bzw. des Anspruchs 2.

Ein Verfahren bzw. eine Vorrichtung dieser Art ist aus der JP-A-03 106 562 bekannt. Die DE 29 08 829 C3 offenbart ein Verfahren zur Durchführung eines Hartlötvorgangs in einer evakuierten Prozeßkammer beschreibt, bei dem miteinander zu verbindende Bauteile durch Aufschmelzen eines Hartlotes miteinander verbunden werden. Während des Hartlötvorgangs ist in der Prozeßkammer ein Vakuum ausgebildet und es erfolgt eine Beheizung der miteinander zu verbindenden Bauteile auf etwa 600°C.

Bei diesem Verfahren erfolgt ein anschließender Abkühlvorgang außerhalb der Prozeßkammer in normaler Umgebungsatmosphäre.

Der vorliegenden Erfindung liegt die Aufgabe zugrunde, ein Verfahren bzw. eine Vorrichtung vorzuschlagen, die kurze Prozeßlaufzeiter und eine einfache Einstellung der Temperatur ermöglichen.

Zur Lösung dieser Aufgabe weist das erfindungsgemäße Verfahren die Merkmale des Anspruchs 1 auf.

Bei dem erfindungsgemäßen Verfahren erfolgt das Abkühlen des Bauteils in einem dem Beheizen nachfolgenden Verfahrensschritt in einer von der Umgebung abgeschlossenen Prozeßatmosphäre, wobei das Beheizen des Bauteils bzw. das Aufschmelzen des Lotmaterials und das Abkühlen des Bauteils in voneinander unabhängigen Prozeßräumen erfolgt.

Das erfindungsgemäße Verfahren läßt sich grundsätzlich ganz allgemein zur Temperaturbeaufschlagung von Werkstücken oder Bauteilen zur Wärmebehandlung, wie bspw. Tempern, Glühen und dergl., einsetzen. Ein besonderer Einsatzbereich liegt im Bereich der Herstellung von Lötverbindungen, die sowohl als Hartlotverbindung als auch als Weichlotverbindung, wie bspw. bei der Herstellung elektronischer Bauelemente und Baugruppen, ausgeführt sein können.

Insbesondere bei der Herstellung von Lotverbindungen ermöglicht das erfindungsgemäße Verfahren nicht nur einen in gleicher Weise wie der Aufschmelzvorgang gesteuerten Abkühlvorgang ohne gegenseitige Beeinflussung der Vorgänge, sondern auch aufgrund der jeweils hinsichtlich ihrer Aufgabe spezifizierten Prozeßräume eine effektive Durchführung des Lötvorgangs einschließlich des Abkühlvorgangs. Einer gegenseitigen Beeinflussung der beiden Vorgänge wird durch die Möglichkeit der Ausbildung unterschiedlicher Prozeßatmosphären in den unterschiedlichen Prozeßkammern entgegengewirkt. Darüber hinaus ergibt sich aus der in einer definierten Prozeßatmosphäre durchgeführten Abkühlung eine insgesamt höhere Qualität der Lotverbindung. Dies erweist sich insbesondere dann als vorteilhaft, wenn die Lotverbindung nicht nur mechanische Verbindungsfunktion, wie bei der Verbindung zwischen metallischen Bauteilen, sondern darüber hinaus auch eine elektrische Verbindungsfunktion, wie beispielsweise bei im SMD (Surface-Mounted-Device)-Verfahren mit elektronischen Bauteilen bestückten Platinen, die über eine Lotverbindung mechanisch und elektrisch leitend mit den Leiterbahnen der Platine verbunden werden.

Insbesondere beim Einsatz des erfindungsgemäßen Verfahrens zur mechanischen Verbindung metallischer Bauteile mittels einer Lotverbindung erweist es sich als vorteilhaft, wenn in einem dem Aufschmelzen des Lotmaterials vorhergehenden Verfahrensschritt eine Präparierung des Lotmaterialträgers durch Beaufschlagung mit einer reduzierenden oder inerten Prozeßatmosphäre und/oder durch Strahlung oder mit Materie in einem separaten Prozeßraum erfolgt. Hierdurch wird es möglich, ohne Beeinträchtigung einer für den nachfolgenden Aufschmelzvorgang besonders geeigneten Prozeßatmosphäre eine Präparierung der Lotmaterialträger, also beispielsweise der metallischen Bauteile, durchzuführen. Hierzu ist es beispielsweise möglich, ein Reduktionsmittel, wie Ameisensäure oder dergleichen, in die Prozeßkammer einzugeben oder auch eine reduzierende Gasatmosphäre in der Prozeßkammer zu erzeugen, wobei vor Übergabe der Lotmaterialträger bzw. der miteinander zu verbindenden Bauteile in die nachfolgende Prozeßkammer zur Durchführung des Aufschmelzvorgangs eine Spülung der Prozeßkammer erfolgen kann, um einer Beeinflussung der in der nachfolgenden Prozeßkammer ausgebildeten Prozeßatmosphäre entgegenzuwirken. Eine derartige Präparierung der Lotmaterialträger bzw. der miteinander zu verbindenden Bauteile kann auch durch eine Plasmabeaufschlagung der Bauteile bzw. der mit dem Lotmaterial im nachfolgenden Aufschmelzvorgang zu benetzenden Kontaktflächen erfolgen.

Eine weitere Möglichkeit einer gegenseitigen Beeinflussung der in den unterschiedlichen Prozeßkammern ausgebildeten unterschiedlichen Prozeßatmosphären entgegenzuwirken, besteht darin, in den jeweiligen Prozeßatmosphären bzw. den Prozeßräumen ein Vakuum auszubilden.

Auch besteht die Möglichkeit, die Prozeßatmosphäre in den jeweiligen Prozeßkammern als Schutzgasatmosphäre auszubilden.

Ein möglichst einfaches Verfahren zur Einstellung der Temperatur des Bauteils wird dadurch möglich, daß die Temperaturbeaufschlagung mittels einer Temperiereinrichtung erfolgt, die zum Aufheizen bzw. Abkühlen des Bauteils mit im wesentlichen konstanter Temperatur betrieben wird. Hierdurch werden insgesamt kurze Prozeßlaufzeiten ermöglicht, da durch den kontinuierlichen Betrieb der Temperiereinrichtung Aufheiz- bzw. Abkühlzeiten der Temperiereinrichtung entfallen. Zur Verkürzung der Temperierzeit bzw. zur Erhöhung der Temperiergeschwindigkeit erweist es sich als vorteilhaft, wenn die Temperatur der Temperiereinrichtung deutlich höher als die gewünschte Prozeß- bzw. Löttemperatur gewählt wird.

Ein möglichst einfaches Verfahren zur Einstellung der Temperatur des Lotmaterials und/oder des Lotmaterialträgers bei Herstellung einer Lotverbindung wird durch eine derartige Temperaturbeaufschlagung ebenfalls ermöglicht.

Eine vorteilhafte Art der Regelung wird dadurch möglich, daß die Temperiereinrichtung als Strahlereinrichtung betrieben wird, und die Temperatur des Bauteils bzw. des Lotmaterialträgers über den Abstand der Strahlereinrichtung zum Bauteil bzw. zum Lotmaterialträger eingestellt wird.

Da die Strahlereinrichtung mit einer Kontakteinrichtung kombiniert ist und zumindest in einer Anfangsphase der Beheizung oder Kühlung eine Temperaturbeaufschlagung mittels Wärme- oder Kälteleitung erfolgt, ist es möglich, die Aufheiz- bzw. Abkühlzeiten erheblich zu verkürzen.

Die erfindungsgemäße Vorrichtung zur Durchführung des vorstehend erläuterten Verfahrens weist die Merkmale des Anspruchs 2 auf.

Zur Vorbereitung des Lotmaterialträgers für die Lotverbindung kann der Aufschmelzkammer eine Präparierungskammer vorgeordnet sein, die einen von der Aufschmelzkammer unabhängigen Prozeßraum bildet.

Wenn die Prozeßkammern als einzelne modulare Einheiten ausgebildet sind, die über Türeinrichtungen miteinander verbindbar sind, ist die erfindungsgemäße Vorrichtung in ihrem Aufbau leicht an unterschiedliche Verfahrensvarianten anpaßbar, so daß beispielsweise je nach Bedarf in einem Fall die Vorrichtung lediglich aus einer Aufschmelzkammer und einer Abkühlkammer gebildet sein kann, und in einem anderen Fall durch eine Präparierungskammer eine Aufschmelzkammer und eine Abkühlkammer, wobei zum Aufbau der jeweiligen Vorrichtung zumindest teilweise identische modulare Einheiten verwendbar sind.

Auch ist es möglich, die Prozeßkammern selbst modular aufzubauen, derart, daß die Türeinrichtungen als Türmodule ausgebildet sind, die zur Ausbildung der Prozeßkammern mit Kammermodulen kombinierbar sind.

Zur Temperaturbeaufschlagung des in den durch die Aufschmelzkammer oder die Kühlkammer gebildeten Prozeßkammern auf einer Trägereinrichtung angeordneten Bauteils ist erfindungsgemäß, eine Strahlereinrichtung vorgesehen, die in ihrem Abstand gegenüber der Trägereinrichtung bzw. dem Bauteil mittels einer Abstandsänderungseinrichtung veränderbar ist. Eine derart ausgebildete Temperaturbeaufschlagungseinrichtung ermöglicht den Betrieb der Strahlereinrichtung mit einer im wesentlichen konstanten Temperatur, wobei zur Durchführung einer Temperaturänderung der durch die Strahlereinrichtung aufgeheizten Trägereinrichtung der Abstand der Strahlereinrichtung gegenüber der Trägereinrichtung veränderbar ist.

Um die Aufheizung der Trägereinrichtung zu beschleunigen und dadurch insgesamt die zur Durchführung des Aufschmelzens in der Aufschmelzkammer bzw. des Abkühlens in der Abkühlkammer notwendige Aufenthaltszeit der Lotmaterialträger zu verkürzen, ist die Strahlereinrichtung mit einer Kontakteinrichtung versehen, die neben einer Temperaturübertragung durch Strahlung auch eine Temperaturübertragung durch Wärmeleitung ermöglicht. Im Falle der Verwendung der Strahlereinrichtung zur Abkühlung des Bauteils bzw. des Lotmaterialträgers kann die Strahlereinrichtung zur Verbesserung der Kühlleistung mit einer Konvektionseinrichtung kombiniert werden.

Eine möglichst einfach gestaltete Ausführung der Strahlereinrichtung unter gleichzeitiger Ausbildung einer Kontakteinrichtung wird möglich, wenn die Strahlereinrichtung als eine temperierbare Platte ausgebildet ist, deren Oberfläche als Kontakteinrichtung dient.

Zur Durchführung einer Regelung des Abstandes der Strahlereinrichtung von der Trägereinrichtung in Abhängigkeit von einer gewünschten Temperatur der Trägereinrichtung ist die Trägereinrichtung oder der Lotmaterialträger mit einem Temperatursensor versehen, dessen Ausgangssignal zur Definition einer Stellgröße zur Veränderung des Abstands der Strahlereinrichtung gegenüber der Trägereinrichtung dient. Der Temperatursensor, der zur Ermittlung der Temperatur der Trägereinrichtung dient, kann auch unmittelbar an der Strahlereinrichtung, also etwa der Platte, angeordnet sein, wobei ein Berührungskontakt zur Trägereinrichtung über eine den veränderten Abstand zwischen der Platte und der Trägereinrichtung ausgleichende Verbindungseinrichtung, wie beispielsweise einer Federeinrichtung, unabhängig vom jeweilig gegebenen Abstand zwischen der Platte und der Trägereinrichtung gewährleistet werden kann.

Insbesondere bei Ausgestaltung des erfindungsgemäßen Verfahrens als kontinuierliches Verfahren, bei dem die auf der Trägereinrichtung angeordneten Lotmaterialträger unter Einhaltung bestimmter jeweiliger Verweilzeiten in den einzelnen Prozeßkammern durch die hintereinanderliegend angeordneten Prozeßkammern getaktet hindurchgeführt werden, erweist es sich als vorteilhaft, die Trägereinrichtungen mit einem Informationsträger zu versehen, der mit einer Leseeinrichtung zusammenwirkt, derart, daß nach einem Eintritt einer Trägereinrichtung in eine erste Prozeßkammer der in der ersten und nachfolgend angeordneten Prozeßkammern ablaufende Prozeß durch die auf dem Informationsträger enthaltenen Informationen gesteuert wird.

Ein besonders wirtschaftlicher Einsatz der Vorrichtung wird möglich, wenn die zumindest eine Beheizungskammer und eine Abkühlkammer umfassende Vorrichtung als Teilvorrichtung in einer in-line Anordnung in eine Bearbeitungs- oder Fertigungslinie integriert ist. So kann sich beispielsweise bei einer Verwendung der Vorrichtung zur Herstellung von SMD-Platinen eine Montageeinrichtung zur Montage der SMD-Platinen an die Vorrichtung anschließen.

Nachfolgend wird eine bevorzugte Variante des erfindungsgemäßen Verfahrens sowie eine dabei beispielhaft eingesetzte Vorrichtung anhand der Zeichnung näher erläutert. Es zeigen:
- **Fig. 1**: eine vereinfachte perspektivische Darstellung einer möglichen Ausführungsform der erfindungsgemäßen Vorrichtung;
- **Fig. 2**: eine Längsschnittdarstellung der in **Fig. 1** dargestellten Vorrichtung;
- **Fig. 3**: eine Türeinrichtung;
- **Fig. 4a**: eine Darstellung einer Ausführungsform der Strahlereinrichtung in einer Grundkonfiguration;
- **Fig. 4b**: die in **Fig. 3a** dargestellte Strahlereinrichtung in einer Aufheizkonfiguration;
- **Fig. 4c**: die in **Fig. 3a** dargestellte Strahlereinrichtung in einer Temperaturregelungskonfiguration.

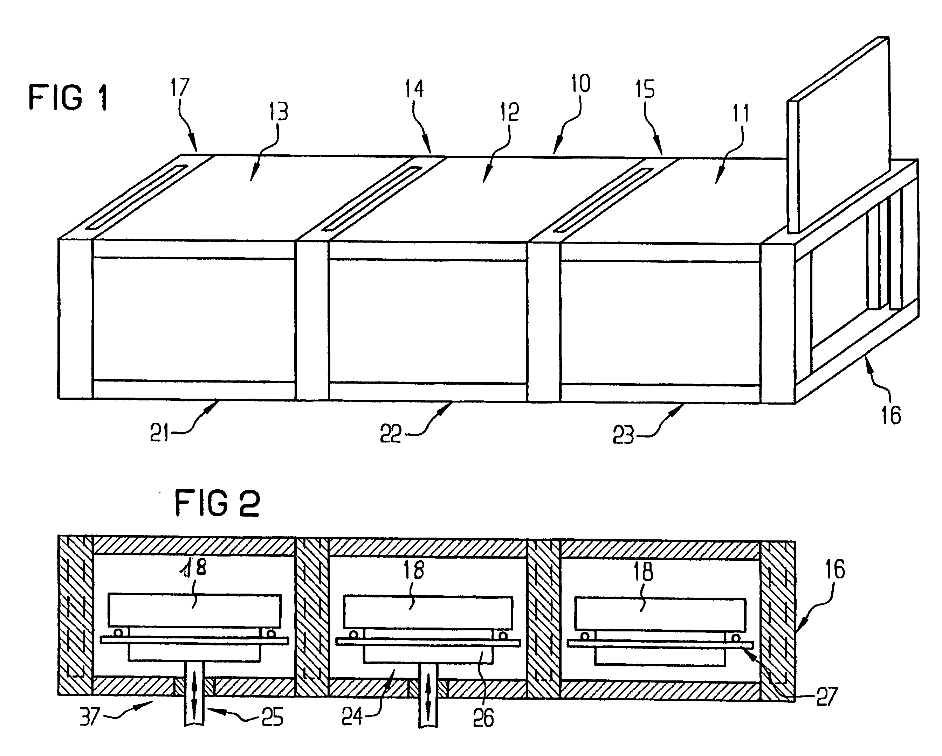

**Fig. 1** zeigt eine Belotungsvorrichtung 10 mit mehreren in Reihe angeordneten Prozeßkammern, nämlich einer Präparierungskammer 11, einer Aufschmelzkammer 12 und einer Abkühlkammer 13. Die einzelnen Prozeßkammern 11, 12 und 13 sind über Türeinrichtungen 14 und 15 untereinander verbunden, wobei darüber hinaus die im dargestellten Ausführungsbeispiel äußeren Prozeßkammern 11 und 13 jeweils eine Türeinrichtung 16 bzw. 17 zum Eintritt bzw. Austritt der in **Fig. 2** dargestellten Trägereinrichtungen 18 aufweisen. Auf den Trägereinrichtungen 18 sind in hier nicht näher dargestellter Art und Weise Lotmaterialträger angeordnet sind, die mit einer Belotung bzw. einer Lotverbindung durch Aufschmelzen eines Lotmaterials versehen werden sollen.

Wie **Fig. 1** deutlich zeigt, sind die einzelnen Prozeßkammern 11, 12 und 13 modular aufgebaut und weisen jeweils ein Kammermodul 21 ergänzt durch zumindest eine Türeinrichtung 14, 15, 16 oder 17 auf, die zur Ausbildung der jeweiligen Prozeßkammer mit dem Kammermodul 21, 22 oder 23 kombiniert ist. Hieraus wird deutlich, daß bei Bedarf die in **Fig. 1** dargestellte Reihenanordnung von insgesamt drei Prozeßkammern zur Ausbildung der Belotungsvorrichtung 10 durch Anschluß weiterer Prozeßkammern modular ergänzbar ist, um neben den in der Präparierungskammer 11, der Aufschmelzkammer 12 und der Abkühlkammer 13 voneinander entkoppelt ablaufenden Teilprozessen des Gesamtverfahrens weitere entkoppelte Teilprozesse zur Erweiterung des Verfahrens anschließen zu können.

Wie durch **Fig. 2** illustriert wird, ermöglicht die hier beispielhaft dargestellte Belotungsvorrichtung 10 die Durchführung eines Verfahrens, bei dem zunächst in einem ersten Verfahrensschritt eine Präparierung des oder der hier nicht näher dargestellten Lotmaterialträger in der Präparierungskammer 11 erfolgt. Hierzu wird die Trägereinrichtung 18 in die Präparierungskammer 11 eingebracht, und nachfolgend erfolgt eine Evakuierung der Präparierungskammer 11 und/oder Eingabe eines reduzierenden Mittels in die Präparierungskammer 11 zur Erzeugung der gewünschten Prozeßatmosphäre. Für den Fall, daß es sich bei den hier nicht näher dargestellten Lotmaterialträgern um mittels einer Lotverbindung miteinander zu verbindende metallische Bauteile handelt, ist beispielsweise die Erzeugung einer reduzierenden Prozeßatmosphäre durch Eingabe von Ameisensäure in die Präparierungskammer 11 denkbar. Nach Erzielung des gewünschten Reduktionsergebnisses kann die Präparierungskammer 11 etwa mit einem Stickstoff-/Wasserstoff-Gasgemisch gespült werden.

Die Trägereinrichtung 18 ist, wie in **Fig. 2** dargestellt, in der Präparierungskammer 11 auf einer Transporteinrichtung 27 angeordnet, die einen Einzug der Trägereinrichtung 18 durch die geöffnete Türeinrichtung 16 in die Präparierungskammer 11 sowie eine Übergabe der Trägereinrichtung 18 nach Öffnung der Türeinrichtung 15 in die Aufschmelzkammer 12 ermöglicht. Nach Einstellung der gewünschten Prozeßatmosphäre in der Aufschmelzkammer 12, also etwa der Ausbildung einer reduzierenden Atmosphäre, oder auch der Ausbildung einer inerten Atmosphäre durch Ausbildung einer Schutzgasatmosphäre in der Aufschmelzkammer 12 erfolgt eine Beheizung der Trägereinrichtung 18 auf die gewünschte Löttemperatur. Die Beheizung wird mittels einer Beheizungseinrichtung 24 durchgeführt, die eine auf einer Hubeinrichtung 25 angeordnete Heizplatte 26 aufweist.

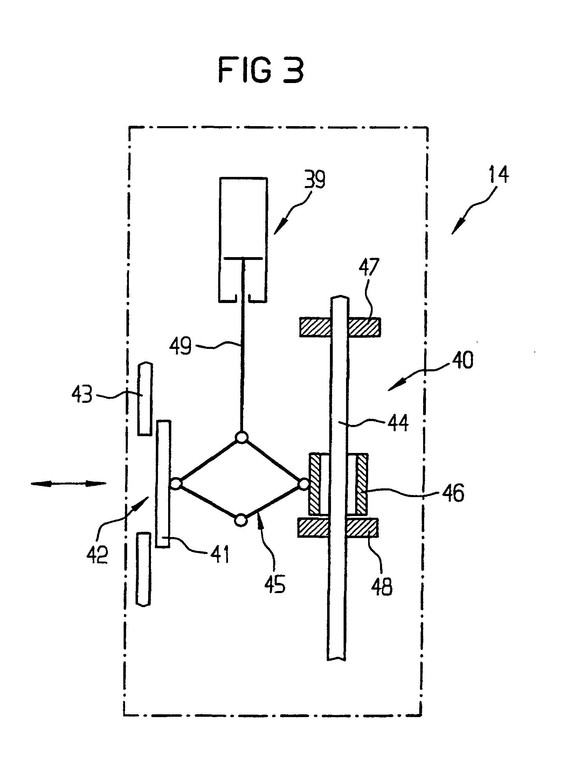

**Fig. 3** zeigt beispielhaft den Aufbau einer Türeinrichtung 14, 15 oder 16. Die Türeinrichtung 14 ermöglicht zur Erzeugung der in den Prozeßkammern 11, 12, 13 (Fig. 2) beliebig unterschiedlich ausgebildeten Prozeßatmosphären eine - wie durch den Doppelpfeil in **Fig. 3** angedeutet - druckrichtungsunabhängige Abdichtung der Prozeßkammern 11, 12, 13 gegeneinander. Die Türeinrichtung 14 weist eine hier aus einem doppelt wirkenden Stellzylinder gebildete Betätigungseinrichtung 39, eine Führungseinrichtung 40 und ein Türblatt 41 auf, das mittels der Führungseinrichtung 40 gegen eine Türöffnung 42 einer Prozeßkammerwandung 43 oder von der Türöffnung 42 weg bewegbar ist. In der Darstellung gemäß **Fig. 3** befindet sich das Türblatt 41 unmittelbar vor der abdichtenden Anlage an der Prozeßkammerwandung 43. Die Führungseinrichtung 40 umfaßt eine parallel zur Ebene der Türöffnung 42 angeordnete Gleitstange 44 längs der ein Doppelkniehebel 45 mittels eines Gleitschuhs 46 geführt ist. Zur Überführung des Türblatts 41 von einer Offenstellung in eine Schließstellung wird ausgehend von einem oberen Gleitanschlag 47 der Gleitschuh 46 nach unten bewegt, bis nach Erreichen eines unteren Gleitanschlages 48 die Ausfahrbewegung eines Stellzylinderkolbens 49 unmittelbar auf den Doppelkniehebel 45 wirkt, derart, daß das Türblatt 41 bis zur abdichtenden Anlage gegen die Prozeßkammerwandung 43 bewegt wird.

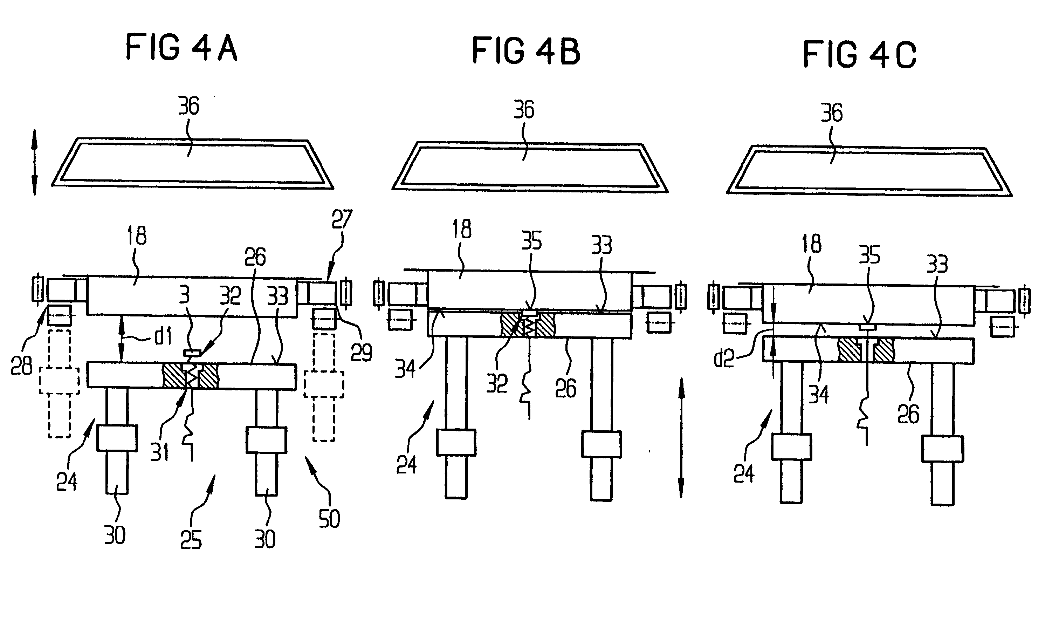

Ein möglicher Aufbau der Beheizungseinrichtung 24 und ihre Funktionsweise wird anhand der **Fig. 4a** bis **4c** näher verdeutlicht. **Fig. 4a** zeigt die Beheizungseinrichtung 24 in ihrer Grundkonfiguration, in der sich die Heizplatte 26 in einem Abstand d1 zur Trägereinrichtung 18 unterhalb der Trägereinrichtung 18 befindet. Wie **Fig. 4a** ferner zeigt, wird die Trägereinrichtung 18 in ihrer Relativposition gegenüber der Beheizungseinrichtung 24 durch die Transporteinrichtung 27 gehalten, die im vorliegenden Fall durch im Bereich der Prozeßkammern 11, 12 und 13 umlaufende Förderstränge 28 und 29 gebildet ist.

Die Heizplatte 26 ist im vorliegenden Fall auf einer aus zwei Hubstößeln 30 gebildeten Hubeinrichtung 25 angeordnet und weist einen in einer Federanordnung 31 aufgenommenen Temperatursensor 32 auf. In der in **Fig. 4a** dargestellten Grundkonfiguration ist die Federanordnung 31 entspannt, so daß der Temperatursensor 32 aus einer Kontaktoberfläche 33 der Heizplatte 26 herausragend angeordnet ist.

**Fig. 4b** zeigt nun die Beheizungseinrichtung 24 in ihrer Aufheizkonfiguration, in der die Heizplatte 26 mit ihrer Kontaktoberfläche 33 an einer Unterseite 34 der Trägereinrichtung 18 anliegt, wodurch eine Wärmeübertragung von der Heizplatte 26 auf die Trägereinrichtung 18 durch Wärmeleitung erfolgen kann. Dabei befindet sich der Temperatursensor 32 in seiner in die Kontaktoberfläche 33 versenkten Position mit seiner Sensoroberfläche 35 bündig in der Kontaktoberfläche 33 angeordnet und liegt daher mit der Sensoroberfläche 35 ebenfalls an der Unterseite 34 der Trägereinrichtung 18 an. Die Heizplatte 26 wird mit konstanter Temperatur betrieben und verbleibt solange in der in **Fig. 4b** dargestellten Kontaktstellung, bis der Temperatursensor 32 die gewünschte Temperatur der Trägereinrichtung 18 ermittelt. Anschließend verfährt die Heizplatte 26 in eine in **Fig. 4c** dargestellte Temperaturregelungskonfigation, in der die Kontaktoberfläche 33 der Heizplatte 26 von der Unterseite 34 der Trägereinrichtung 18 mit einem Abstand d2 beabstandet ist, wobei der Temperatursensor 32 bewirkt durch die Federanordnung 31 mit seiner Sensoroberfläche 35 in Kontakt mit der Trägereinrichtung 18 verbleibt. In der dargestellten Temperaturregelungskonfigation der Heizplatte 26 wirkt die Heizplatte 26 nur noch als Strahlereinrichtung und ermöglicht einen Wärmeeintrag in die Trägereinrichtung 18 durch Strahlung. Hierdurch wird verhindert, daß durch eine fortwährende Anlage der mit konstanter Temperatur betriebenen Heizplatte 26 an der Trägereinrichtung 18 die Temperatur der Trägereinrichtung über die gewünschte Temperatur ansteigt. Im Folgenden wird in Abhängigkeit von den über den Temperatursensor 32 ermittelten Temperaturdifferenzen gegenüber der Solltemperatur der Trägereinrichtung mittels eines hier nicht näher dargestellten Stellgebers so oft wie erforderlich eine Änderung des Abstands d2 zwischen der Unterseite 34 der Trägereinrichtung 18 und der Kontaktoberfläche 33 der Heizplatte 26 eingestellt, derart, daß die Solltemperatur der Trägereinrichtung 18 über die zur Durchführung des Aufschmelzvorgangs notwendige Verweildauer der Trägereinrichtung 18 in der Aufschmelzkammer 12 gehalten wird.

Die vorstehend beschriebene Abstandsregelung kann, wie durch die strichlinierte Darstellung in **Fig. 4a** angedeutet, mittels einer Abstandsänderungseinrichtung erfolgen, die anstatt einer auf die Heizplatte wirkenden Hubeinrichtung 25 eine auf die Transporteinrichtung 27 bzw. die Förderstränge 28, 29 wirkende Hubeinrichtung 50 vorsieht. Wesentlich für die Temperaturregelung bei mit im wesentlichen konstanter Temperatur betriebener Heizplatte 26 ist allein die Möglichkeit der Änderung des Relativabstands zwischen der Heizplatte 26 und der Trägereinrichtung 18 bzw. dem Lotmaterialträger.

Wie in den **Fig. 4a** bis **4c** ergänzend dargestellt, kann die Wirkung der Beheizungseinrichtung 24 bei Bedarf noch durch weitere Beheizungseinrichtungen, wie beispielsweise eine hier oberhalb der Trägereinrichtung 18 angeordnete Strahlungsheizung 36 ergänzt werden. Auch die Strahlungseinrichtung 36 kann mit einer in ihrer Wirkungsweise der Abstandsregelung der Beheizungseinrichtung 24 entsprechenden Abstandsregelung versehen sein.

Wie Fig. 2 zeigt, erfolgt nach Beendigung der Aufschmelzphase in der Aufschmelzkammer 12 die Übergabe der Trägereinrichtung 18 in die Abkühlkammer 13, in der eine von der Prozeßatmosphäre in der Aufschmelzkammer 12 abweichende Prozeßatmosphäre ausgebildet sein kann. Die Abkühlkammer 13 ist mit einer Kühleinrichtung 37 versehen, die insbesondere betreffend die Abstandsregelung in ihrer Ausführung und Wirkungsweise der in den **Fig. 4a** bis **4c** ausführlich dargestellten Beheizungseinrichtung 24 entspricht. Die Kühleinrichtung 37 ermöglicht ein definiertes Abkühlen, beispielsweise durch Realisierung einer vorgegebenen Abkühlkurve, der Trägereinrichtung 18 durch eine Kombination aus Kältestrahlung und Kälteleitung ermöglicht. Wie die Beheizungseinrichtung 24 kann auch die Kühleinrichtung 37 mit konstanter Temperatur betrieben werden, wobei die Temperatur der Trägereinrichtung 18 durch eine Veränderung bzw. Regelung des Abstands zwischen einer Kühlplatte 38 und der Trägereinrichtung 18 beeinflußbar ist.

## Patentansprüche

1. Verfahren zur Temperaturbehandlung von Werkstücken oder Bauteilen, insbesondere zur Herstellung einer Lotverbindung zwischen einem Lotmaterial und zumindest einem als Lotmaterialträger dienenden Bauteil oder Werkstück durch Aufschmelzen des auf dem Lotmaterialträger angeordneten Lotmaterials, bei dem eine Beheizung und in einem nachfolgenden Verfahrensschritt ein Abkühlen zumindest eines Bauteils in einer von der Umgebung abgeschlossenen Prozessatmosphäre erfolgt, wobei die Beheizung und das Abkühlen des Bauteils in voneinander unabhängigen Prozessräumen (12, 13) mit voneinander abweichenden Prozessatmosphären erfolgen, und eine Temperaturbeaufschlagung zum Beheizen des Bauteils und/oder zum Abkühlen des Bauteils durch eine beheizbare bzw. kühlbare Temperiereinrichtung (24, 37, 33, 26, 38) erfolgt, derart, dass die Temperiereinrichtung zum Aufheizen bzw. Abkühlen mit jeweils im Wesentlichen konstanter Temperatur betrieben wird, wobei die Temperiereinrichtung als Strahlereinrichtung (24, 37) betrieben wird
**dadurch gekennzeichnet,**
**dass** die Strahlereinrichtung (24, 37) mit einer Kontakteinrichtung (33) kombiniert ist, derart, dass zumindest in einer Anfangsphase der Beheizung oder Kühlung eine Temperaturbeaufschlagung mittels Wärme- oder Kälteleitung erfolgt und die Solltemperatur des Bauteils über den Abstand der Strahlereinrichtung zum Bauteil eingestellt wird.

2. Vorrichtung zur Durchführung des Verfahrens nach Anspruch 1 mit einer Beheizungskammer bzw. Aufschmelzkammer (12), in der ein Beheizen eines Bauteils, insbesondere zum Aufschmelzen eines auf einem als Lotmaterialträger dienenden Bauteil angeordneten Lotmaterials zur Herstellung einer Lotverbindung, erfolgt, wobei an die Beheizungskammer bzw. Aufschmelzkammer eine Abkühlkammer (13) zum Abkühlen des Bauteils angeschlossen ist und die Beheizungskammer bzw. die Aufschmelzkammer und die Abkühlkammer voneinander unabhängige Prozessräume bilden, wobei zumindest die als Beheizungskammer bzw. Aufschmelzkammer und/oder die als Abkühlkammer dienenden Prozesskammern mit einer Strahlereinrichtung (24, 37) zur Temperaturbeaufschlagung des auf einer Trägereinrichtung (18) angeordneten Bauteils versehen sind,
**dadurch gekennzeichnet,**
**dass** die Strahlereinrichtung (24, 37) mit einer Kontakteinrichtung (33) kombiniert ist und die Strahlereinrichtung mittels einer Abstandsänderungseinrichtung (25) in ihrem Abstand zur Trägereinrichtung (18) bzw. dem Bauteil veränderbar ist, derart, dass die Trägereinrichtung (18) mit einem Temperatursensor (32) versehen ist, dessen Ausgangssignal zur Definition einer Stellgröße zur Veränderung des Abstands der Strahlereinrichtung (24, 37) gegenüber der Trägereinrichtung (18) dient.

3. Vorrichtung nach Anspruch 2
**dadurch gekennzeichnet,**
**dass** die Strahlereinrichtung (24, 37) eine temperierbare Platte (26, 38) aufweist, deren Oberfläche als Kontakteinrichtung (33) dient.

4. Vorrichtung nach Anspruch 2 oder 3,
**dadurch gekennzeichnet,**
**dass** die Prozesskammern (11, 12, 13) als modulare Einheiten ausgebildet sind, die über Türeinrichtungen (14, 15, 16, 17) miteinander verbindbar sind.

5. Vorrichtung nach Anspruch 4,
**dadurch gekennzeichnet,**
**dass** die Prozesskammern (11, 12, 13) modular aufgebaut sind, derart, dass die Türeinrichtungen (14, 15, 16, 17) als Türmodule ausgebildet sind, die zur Ausbildung der Prozesskammern mit Kammermodulen (21, 22, 23) kombinierbar sind.

6. Vorrichtung nach einem oder mehreren der Ansprüche 2 bis 5,
**dadurch gekennzeichnet,**
**dass** die Trägereinrichtung (18) mit einem Informationsträger versehen ist, der mit einer Leseeinrichtung zusammenwirkt, derart, dass nach einem Eintritt der Trägereinrichtung (18) in eine erste Prozesskammer (11, 12, 13) der in der ersten und nachfolgend angeordneten Prozesskammern ablaufende Prozess durch die auf dem Informationsträger enthaltenen Informationen gesteuert wird.

## Claims

1. A process for thermal treatment of workpieces or components, in particular for producing a soldered joint between a solder material and at least one component or workpiece serving as a carrier for said solder material, by melting of the solder material arranged on the carrier, wherein heating of at least one component and cooling of said component in a subsequent procedural step take place in a process atmosphere which is sealed off from the environment, whereby the heating and cooling of the component take place in process chambers (12, 13) independent of one another with process atmospheres differing from one another, and application of temperature for heating the component and/or for cooling the component occurs by way of a tempering device (24, 37, 33, 26, 38) which can be heated or cooled, such that the tempering device for heating or cooling is operated at an essentially constant temperature, whereby the tempering device is operated as a radiator device (24, 37),
**characterised in that**
the radiator device (24, 37) is combined with a contact device (33), such that temperature application takes place at least in one starting phase of the heating or cooling by means of conveying heat or cold and the set temperature of the component is adjusted by the distance of the radiator device from the component.

2. A device for carrying into effect the process as claimed in Claim 1 with a heating chamber or melt chamber (12), in which heating of a component takes place, in particular for melting a solder material for producing a solder joint arranged on a component acting as solder material carrier, whereby a cooling chamber (13) for cooling the component is connected to the heating chamber or the melt chamber and the heating chamber or the melt chamber and the cooling chamber form process chambers independent of one another, whereby at least the process chambers serving as heating chamber or melt chamber and/or the process chambers serving as cooling chamber are provided with a radiator device (24, 37) for applying temperature to the component arranged on a carrier device (18),
**characterised in that**
the radiator device (24, 37) is combined with a contact device (33) and the radiator device can be altered in its distance from the carrier device (18) or the component by means of a distance modification device (25), such that the carrier device (18) is provided with a temperature sensor (32), whereof the output signal serves to define a set variable for altering the distance of the radiator device (24, 37) relative to the carrier device (18).

3. The device as claimed in Claim 2,
**characterised in that**
the radiator device (24, 37) has a temperable plate (26, 38) whose surface acts as contact device (33).

4. The device as claimed in Claim 2 or 3,
**characterised in that**
the process chambers (11, 12, 13) are designed as modular units which can be joined to one another via door mechanisms (14, 15, 16, 17).

5. The device as claimed in Claim 4,
**characterised in that**
the process chambers (11, 12, 13) are designed in a modular fashion, such that the door mechanisms (14, 15, 16, 17) are designed as door modules which can be combined with chamber modules (21, 22, 23) to form the process chambers.

6. The device as claimed in one or more of Claims 2 to 5,
**characterised in that**
the carrier device (18) is provided with an information medium which cooperates with a reader, such that after the carrier device (18) enters a first process chamber (11, 12, 13) the process running in the first and subsequently arranged process chambers is controlled by the information contained on the information medium.

## Revendications

1. Procédé pour le traitement thermique de pièces à usiner ou de composants, en particulier pour la réalisation d'une jonction par brasage entre une matière d'apport de brasage et au moins un composant ou une pièce à usiner faisant office de support pour la matière d'apport de brasage, par mise en fusion de la matière d'apport de brasage disposée sur le support pour la matière d'apport de brasage, procédé dans lequel on procède à un réchauffement et, dans une étape opératoire ultérieure, à un refroidissement d'au moins un composant dans une atmosphère opératoire fermée par rapport à l'environnement, le réchauffement et le refroidissement du composant ayant lieu dans des espaces opératoires (12, 13) réciproquement indépendants, et dans lequel on met en oeuvre une sollicitation thermique pour le réchauffement du composant et/ou pour le refroidissement du composant via un dispositif de thermostatisation (24, 37, 33, 26, 38) qui peut être réchauffé respectivement qui peut être refroidi, de telle sorte que le dispositif de thermostatisation est mis en service avec respectivement une température essentiellement constante pour le réchauffement, respectivement pour le refroidissement, le dispositif de thermostatisation étant mis en service sous la forme d'un dispositif d'irradiation (24, 37), **caractérisé en ce que** le dispositif d'irradiation (24, 37) est combiné à un dispositif de mise en contact (33) de telle sorte que, au moins dans la phase naissante du réchauffement ou du refroidissement, on met en oeuvre une sollicitation thermique à l'aide d'une conduction thermique ou d'une conduction réfrigérante, et on règle la température de consigne du composant via l'écartement entre le dispositif d'irradiation et le composant.

2. Dispositif pour la mise en oeuvre du procédé selon la revendication 1, comprenant une chambre de réchauffement, respectivement une chambre de mise en fusion (12), dans laquelle on procède à un réchauffement d'un composant, en particulier pour la mise en fusion d'une matière d'apport de brasage disposée sur un composant faisant office de support pour la matière de brasage, pour l'obtention d'une jonction par brasage, une chambre de refroidissement (13) pour le refroidissement du composant étant raccordée à la chambre de réchauffement, respectivement à la chambre de mise en fusion, la chambre de réchauffement, respectivement la chambre de mise en fusion et la chambre de refroidissement formant des espaces opératoires réciproquement indépendants, au moins les chambres opératoires faisant office de chambre de réchauffement, respectivement de chambre de mise en fusion et/ou la chambre opératoire faisant office de chambre de refroidissement, étant munie d'un dispositif d'irradiation (24, 37) pour la sollicitation thermique du composant placé sur un dispositif de support (18), **caractérisé en ce que** le dispositif d'irradiation (24, 37) est combiné à un dispositif de mise en contact (33) et le dispositif d'irradiation peut être soumis à une modification, à l'aide d'un dispositif de modification de l'écartement (25), en ce qui concerne son écartement par rapport au dispositif de support (18), respectivement par rapport au composant, de telle sorte que le dispositif de support (18) est muni d'un capteur de température (32) dont le signal de sortie est utilisé pour la définition d'une valeur de consigne pour la modification de l'écartement du dispositif d'irradiation (24, 37) par rapport au dispositif de support (18).

3. Dispositif selon la revendication 2, **caractérisé en ce que** le dispositif d'irradiation (24, 37) présente une plaque apte à une thermostatisation (26, 38), dont la surface fait office de dispositif de mise en contact (33).

4. Dispositif selon la revendication 2 ou 3, **caractérisé en ce que** les chambres opératoires (11, 12, 13) sont réalisées sous la forme d'unités modulaires qui peuvent être reliées les unes aux autres via des dispositifs (14, 15, 16, 17) faisant office de portes.

5. Dispositif selon la revendication 4, **caractérisé en ce que** les chambres opératoires (11, 12, 13) sont de construction modulaire de telle sorte que les dispositifs (14, 15, 16, 17) faisant office de portes sont réalisés sous la forme de modules faisant office de portes, qui peuvent être combinés, pour la réalisation des chambres opératoires, avec des modules (21, 22, 23) faisant office de chambres.

6. Dispositif selon une ou plusieurs des revendications 2 à 5, **caractérisé en ce que** le dispositif de support (18) est muni d'un support d'informations qui coopère avec un dispositif de lecture, de telle sorte qu'après l'entrée du dispositif de support (18) dans une première chambre opératoire (11, 12, 13), le processus qui se déroule dans la première chambre opératoire et dans les chambres montées à la suite est commandé par les informations contenues sur le support d'informations.
